# EUROPEAN PATENT SPECIFICATION

(11) **EP 3 355 692 B1**
(45) Date of publication and mention of the grant of the patent: **28.04.2021**
(21) Application number: 15781596.0
(22) Date of filing: 29.09.2015
(51) Int. Cl.: A01K 73/02, A01K 79/00, A01K 79/02

(54) **A TRAWL AND A METHOD FOR FISHING**
SCHLEPPNETZ UND VERFAHREN ZUM FISCHEN
CHALUT ET PROCÉDÉ DE PÊCHE

(43) Date of publication of application: 08.08.2018
(73) Proprietor: Acoustic Fishing ApS, 5700 Svendborg (DK)
(72) Inventor: MÜLLER, Jan Allan, 8700 Horsens (DK); LARSEN, Lars, 8700 Horsens (DK); LARSEN, Ole, 8700 Horsens (DK); THOMSEN, Thorvald, 700 Klaksvik (FO); HANSEN, Høgni, 690 Oyndarfjørdur (FO)
(74) Representative: AWA Denmark A/S
(86) International application number: PCT/EP2015/072417
(87) International publication number: WO 2017/054845

(56) References cited:
- WO-A1-98/03061
- RU-C1- 2 140 736
- RU-C2- 2 185 729
- SU-A1- 935 046
- SU-A1- 1 741 696

## Description

The present invention relates to trawls.

A trawl is generally a bag-shaped fishing net adapted to be towed behind a fishing vessel through the water in order to catch fish shoals which are in the towing path.

In order to optimise the fishing process economically and resource wise, the trawl should be filled with fish as quickly as possible. It is, however, the experience that far less fish than identified by the sonar when the fishing vessel passes over the shoals of fishes actually get caught into the trawl. That is to say some fish elude the trawl by leaving the trajectory of the trawl between the fishing vessel and the trawl. From an economical and resource perspective this is undesirable, as it prolongs the time spent at sea and the distances to be covered, in turn incurring unnecessary fuel consumption etc.

It has been suggested to use sound in improving the fishing efficiency.

In this respect the Soviet Inventor's Certificate SU935046T suggests to provide cables fitted with emitters for sound and electrical signals between the trawl doors of a trawl. The sound emitters are to emit sound that is attractive to the fish, and once attracted, the emitted electrical signals are to scare the fish into the mouth of the trawl. No details on how and whether this works are given.

Russian patent RU2343704C suggests to place acusto-optical emitters as well as a sonar system inside the trawl. Upon detection by the sonar system of fish being within and moving towards the mouth of the trawl, the skipper of the fishing vessel may activate the acusto-optical emitters, to emit sounds, such as those of predators, and light. This is said to disorient the fish briefly, but long enough to prevent them from swimming continuously in the direction which the trawl is being towed along, and thus prevent them from leaving the trawl through the mouth. No further details on how and whether this works are given.

In any case, neither of the two proposals above has gained any commercial success

Documents RU 2 185 729 C2, WO 98/03061 A1 and RU 2 140 736 C1 disclose each a trawl according to the preamble of claim 1.

Based on this prior art it is the object of the present invention to provide an apparatus and a method improving the fishing efficiency using sound.

According to a first aspect of the invention defined in claim 1 Z this object is achieved by a trawl adapted to be towed in a towing direction along a desired towing trajectory behind a towing vessel, the trawl comprising a pair of trawl doors, where each trawl door is adapted to be attached to a towing cable extending from the towing vessel, a bag shaped net having a leading end and a trailing end with respect to the towing direction, the bag shaped net being adapted to be attached to cables extending from the trawl doors in a trailing direction thereof, and the bag shaped net having one or more leading edges defining a mouth opening extending in a cross wise direction with respect to the towing direction, and the bag shaped net presenting a cod end at the trailing end, characterized in that the trawl comprises directional acoustic emitters adapted to emit sound forwardly at an angle to the towing direction.

By emitting sound directionally in the forward direction barriers of sound are provided in front of the trawl. These barriers form virtual extensions of the trawl because the sounds will startle fish approaching the barriers of sound, and make the fish change swimming direction when they approach the barrier. Thus, with suitably mounted acoustic emitters, a virtual funnel of sound in front of the trawl may be formed and direct the fish into the actual trawl.

According to a second aspect of the present invention defined in claim 8 the object is achieved by a method for fishing wherein a trawl comprising a bag shaped net is towed in a towing direction along a desired towing trajectory behind a towing vessel, characterized in that sound adapted to startle fish to be captured in the trawl is emitted forwardly at an angle to the towing direction from directional acoustic emitters provided on the trawl.

By emitting sound directionally in the forward direction the fish can be startled and prevented from eluding the trawl. These sounds are thus used to form barriers functioning as virtual extensions of the trawl because the sounds will startle fish approaching the barriers of sound, and make the fish change swimming direction when they approach the barrier.

According to the invention, the acoustic emitters are provided on the trawl doors and at said one or more leading edges of the bag shaped net. Thereby the barriers of sound can be joined to form a funnel shape to provide a virtual extension of the trawl.

According to another preferred embodiment, the trawl doors comprise further directional acoustic emitters adapted to emit sound towards at least some of said one or more leading edges of the bag shaped net. Providing the acoustic emitters on the trawl doors provide a stable platform for them and helps closing any gaps between the barriers of sound between the upper and lower leading edges of the net.

According to a further preferred embodiment, the acoustic emitters emit sound in the range of 10 Hz to 50 kHz. Sounds within this frequency range has been found efficient in startling fish and make them change their swimming direction. Thus, if fish swim across the towing direction and approache the barrier of sound, emitted by the directional acoustic emitters, they will be startled briefly and change the swimming direction and remain in the virtual extension of the trawl. Furthermore this acoustic range will not interfere with the towing vessel's sonar or ultrasonic communications systems.

According to a preferred embodiment, the acoustic emitters are adapted to emit a sound spectrum. In this way one and the same emitter or emitting system may be used for different species of fish, having different auditory capabilities.

According to another preferred embodiment, the acoustic emitters are adapted to emit pure tones. This allows the sounds to be tuned to frequencies suitable to startle specific species of fish.

According to a further preferred embodiment, the acoustic emitters are adapted to emit intermittently. Emitting intermittently will reduce the power consumption by the emitters, and will allow the emitters to emit throughout a trawling tow and still run on a single set of batteries, thus in turn obviating the need of external power supply lines.

In this respect, the acoustic emitters are adapted to emit with a duty cycle in the range of 5-50%, preferably 10%, and a period of less than 1 second, preferably 0.5 second. This suffices to startle the fish long enough to not pass through the barriers of sound.

The method according to the second aspect of the invention, may be implemented in accordance with the above preferred embodiments to obtain the same advantages.

The invention will now be described in greater detail based on nonlimiting exemplary embodiments and with reference to the drawings on which:
Fig. 1 shows a schematic side view of a trawl according to the invention being towed through the water behind a towing vessel,
Fig. 2 shows a schematic top plan view of the trawl of Fig. 1,
Fig. 3 shows a schematic front view of the trawl of Figs. 1 and 2,
Fig. 4 shows a trawl door with acoustic emitters according to the invention.

For the proper understanding of the features of the trawl in the following description it should premised that features such as top, bottom, front, back, left, right, are to be understood in their normal sense applied on a trawl in use, i.e. in relation to the towing direction in which the trawl is being towed along a towing trajectory in the water.

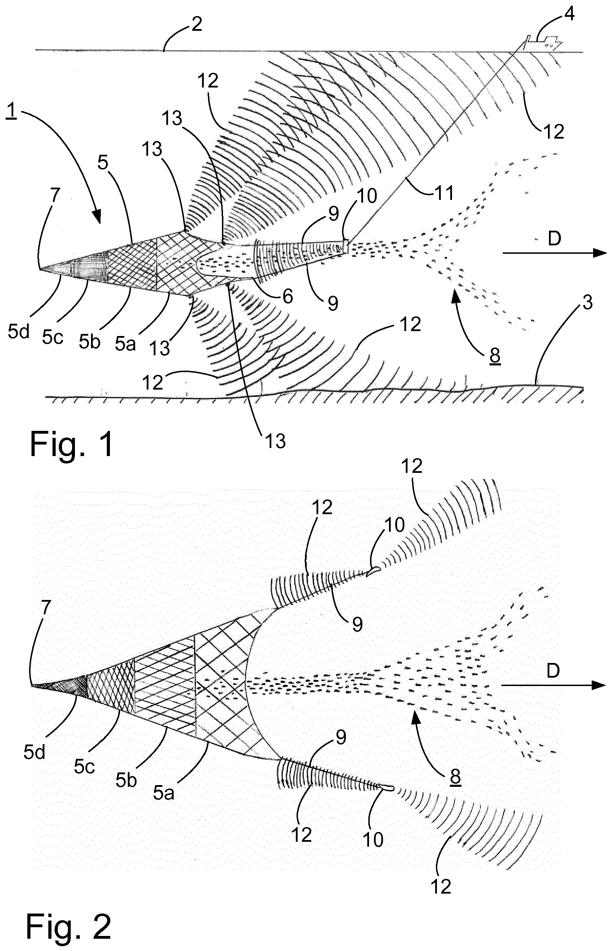

Turning first to fig. 1, a pelagic trawl 1 according to the present invention is shown. The trawl 1 is towed through the water between the surface 2 and the seabed 3 behind a towing vessel 4 at the surface.

The trawl of Fig. 1 is generally a traditional pelagic trawl comprising a bag shaped net 5 having a leading end 6 and a trailing end 7 with respect to the towing direction D, indicated with an arrow in Figs. 1 and 2, respectively.

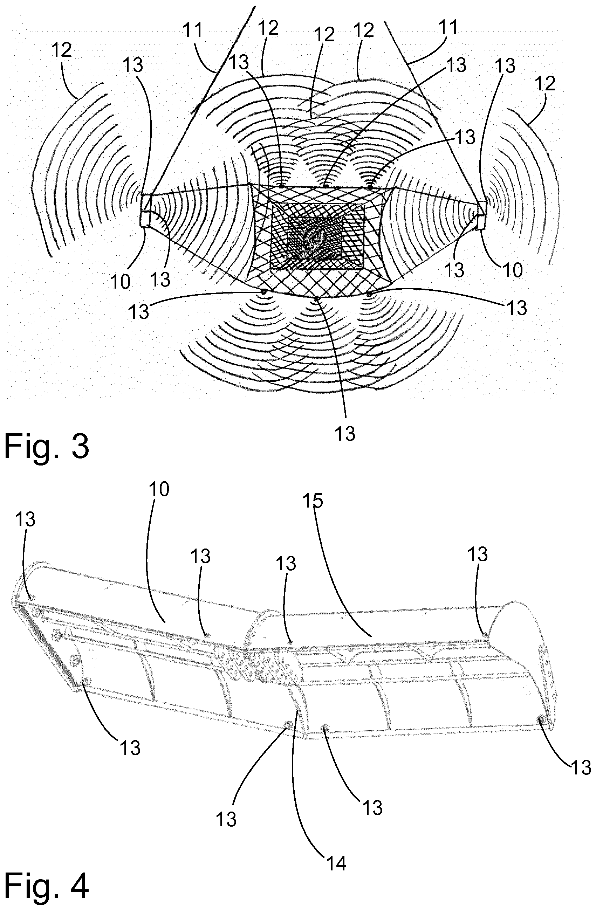

The bag shaped net 5 comprises a number of sectors 5a to 5d with different mesh sizes decreasing from the leading end 6 towards the trailing end 7. The final sector 5d the trailing end, usually referred to as the cod end is closed and has mesh sizes adapted to prevent fish 8 above the specific allowable sizes for the desired species to escape. The mesh sizes of the leading sectors 5a-5c would allow fish 8 to escape, but noise, pressure, movement etc. from the net being dragged through the water prevent the fish 8 from doing so. See e.g. "Fish Reactions to Trawl Gear - A Study Comparing Light and Heavy Ground Gear", Main, J. et al, Dept. of Agriculture and Fisheries for Scotland (1983), URL: <http://www.gov.scot/Uploads/Documents/No%2027.pdf>. The leading end 6 of the net 5 formed by the leading end of the leading sector 5a is open so as to form a mount opening i.e. an opening into the net 5 extending cross wise with respect to the towing direction D. As can be seen in Fig. 3 the mouth opening may present a generally rectangular area, as seen from the towing direction D, i.e. if projected onto a plane (not shown) perpendicular to the towing direction D.

To keep this mouth opening open, the upper leading edge of the leading end 6, which is formed by a cable often referred to as the headline, of the net 5 is provided with floats, often termed bobbins, whereas the lower leading edge of the leading end 6, which is formed by a cable often referred to as the foot rope, is provided with weights, e.g. in the form of chains. Due to the positive and negative buoyancy, the headline and the foot rope, respectively, will be dragged apart and keep the mouth open in the vertical direction.

In order to keep the mouth open in the horizontal direction, the trawl comprises a pair of trawl doors 10, often also referred to as otter boards. In the present description and claims the two terms are considered synonym, and no distinction is made. Trawl doors 10 are more or less elaborated plates adapted to be dragged in a generally vertical orientation through the water under an angle of attack in the horizontal direction across the towing direction D, so as to force them away from the towing trajectory. The four corners of the leading end 6 of the net 5, i.e. the respective ends of both the headline and foot rope forming the upper and lower leading edges, are each connected to a respective cable 9. The four cables 9, in turn are connected in pairs to each one of the pair of trawl doors 10. Each trawl 10 door in turn is adapted to be attached to a towing cable 11 extending from the towing vessel 4. As mentioned, the trawl doors 10 may be more or less elaborate, and may as can best be seen in Fig. 4, have complicated hydrodynamic shapes to increase stability in the water, increase efficiency and reduce drag.

As indicated above, in the prior art, some fish seem to elude the trawl 1, even though the trawl 1 is towed along at the correct speed, trajectory and depth to catch a shoal of fish 8 identified and located by the sonar of the towing vessel 4.

In order to avoid this, the present invention provides a virtual extension of the trawl 1 by acoustic means. It has been found that sounds at given frequencies and sound pressures will startle fish 8, and make them change their swimming direction briefly.

In accordance with this the trawl 1 of the present invention has been provided with directional acoustic emitters 13, which are adapted to emit sound in coordinated directions generally contiguous with the envelope of the net, i.e. to provide barriers of sound 12 for the fish 8 forming at least partially a funnel tapering towards and coinciding with the mouth of the net 5. For clarity of the figures, not all barriers of sound are represented in all of Figs. 1-3.

Primarily these directional acoustic emitters 13 are adapted to emit sound forwardly at an angle to the towing direction D. This may be an angle that corresponds generally to the angle of the envelope of the net at the leading end 6 with respect to the towing direction, i.e. tangential thereto, so as to form a smooth transition from the net 5 to the virtual extension thereof. It may evidently also be a larger or a smaller angle. Adapting the acoustic emitters 13 at the headline and/or the foot rope to emit at a larger angle is of advantage because the sound has a finite propagation range and will be attenuated over distance to a level where the fish 8 are no longer startled. By using a larger angle, sound is emitted in a direction with a shorter distance to the surface or the seabed. The barriers of sound 12 for the fish 8 may thus be better able to cover the entire water column from the seabed 3 to the surface 2 and thus preventing the fish from passing above and below the trawl 1. In respect of angles it should be noted that sound is emitted as divergent beams, typically conical beams, and that the angle is considered to be the angle of the centreline of the beam with respect to the towing direction D. Since such beams will typically be al it is preferred to provide several directional acoustic emitters 13 at the headline, which, as can be seen in Figs. 1 and 3, all emit in parallel the same general direction. Similarly, as can also be seen in Figs. 1 and 3 it is also preferred to use several directional acoustic emitters 13 at the foot rope.

Since, as mentioned above, the sound has only a finite range, it is of advantage of placing acoustic emitters 13 on the trawl doors 10 which lead the net 5. Thus by placing acoustic emitters 13 which emit forwardly at an angle in the lateral directing on the trawl doors 10, the barriers of sound 12 for the fish 8 are extended by the distance between the leading end 6 of the net 5 to the trawl doors 10, i.e. approximately the length of the cables 9. This distance would typically be in the range of 150 m to 200 m for a trawl 1 with a net 5 with a length of 200 m a height of 100 m and a width of 150 m.

Evidently advancing the directional acoustic emitters 13 forwardly, as described above, potentially leaves a gap in the barrier of sound 12 behind each of the trawl doors 10. This gap may easily be covered using further directional acoustic emitters 13 on the trawl doors 10, where the further directional acoustic emitters 13 are adapted to emit sound towards the leading end 6 of the net 5, in particular towards the lateral sides formed between the ends of the headline and the corresponding ends of foot rope forming the upper and lower leading edges, as described above. That is to say, sound is emitted backwardly at an angle to the towing direction towards at least some of the one or more leading edges of the bag shaped net 5 from further directional acoustic emitters 13 provided on the trawl doors 10. These further emitters 13 may be located centrally on or in conjunction with a bulkhead 14 of the trawl door 10, or as shown in Fig. 4 in close vicinity thereof. Evidently, the gap also covered by directional acoustic emitters 13 (not shown) on a leading edge of the leading end 6 of the bag shaped net 5 emitting towards the trawl doors 10.

The directional acoustic emitters 13 at the net 5 are preferably self-contained autonomous pods attached to the net, but evidently at the trawl doors 10 they may be integrated in the trawl doors 10 as illustrated in Fig. 4. Evidently, if necessary more directional acoustic emitters 13 may be provided at or integrated in the trawl doors, forwardly emitting directional sound emitters at the leading edge 15 of the trawl door 10 e.g. in conjunction with the bulkhead 14 mentioned above or in close vicinity thereof as illustrated in Fig. 4.

If not integrated in the trawl doors 10, the autonomous pods are sealed beer can sized pods capable of withstanding the external pressure at the trawling depth. The pods contain the electronics for producing the signals for the transducers of the directional acoustic emitters. They also comprise room for the power supply. A set of alkaline D cells (LR20), e.g. a set of three, will last more than 10 hours, and suffice for the duration of a trawling haul.

The sound is preferably emitted intermittently in order to save power and prolong the battery life. Preferably, the sound is emitted with a 10% duty-cycle and a ½ second period, i.e. 50 ms emission 450 ms silence. Variations are of course possible, but evidently the silence should not have a duration allowing the startled fish 8 to recover and swim across the barrier of sound 12 to find themselves on the outside of the funnel at the next sound emission. At typical trawling speeds, which depend on the species of fish 8 to catch, the silent period should not exceed 1 second. Thus in general, the acoustic emitters 13 are adapted to emit with a duty cycle in the range of 5-50%, preferably 10%, and a period of less than 1 second, preferably 0.5 second, depending *inter alia* on the species of fish 8 to catch. The sound volume exceeds 200 dB SPL at the centreline of the beam.

Different species of fish 8 have different startle responses, and consequently depending on the species of fish 8 to catch the emitted sound may differ. The startle responses have e.g. been studied in "Startle response of captive North Sea fish species to underwater tones between 0.1 and 64 kHz.", Kastelein, Ronald A. et al, Marine Environmental Research 65, Vol. 2008, pages 369-377, Elsevier. URL: <http://www.sciencedirect.com/science/ article/pii/S0141113608000056>. The sound may be a pure tone at a desired frequency, or it may cover a frequency range. If covering a frequency range, the sound may be a frequency sweep over the emission period e.g. a chirp or ping or it may be the simultaneous emission of all or several frequencies in the range, i.e. pink or white noise. The skilled person will understand that other possibilities and combinations exist. The frequencies are preferably adapted to the species of fish 8 to catch, but is generally in the range of 10 Hz to 50 kHz. Following the study above, narrower ranges would be preferable in order to target specific species of fish 8 and not spending battery power emitting sound at irrelevant frequencies.

Thus, it may be relevant to narrow down the frequency interval to 10 Hz - 4 kHz, to 10 Hz - 2 kHz, to 10 Hz - 400 Hz, to 10 Hz - 250 Hz, to 10 Hz - 70 Hz, or even to 40 Hz - 70 Hz, in order to include the ranges where fish 8 like Atlantic herring, horse mackerel, pollack, pout, thick lip mullet, sea bass and other trawled species of fish 8 have their acoustic sensitivity or startle response. Atlantic herring appear to respond to pure tones at 4 kHz, and such pure tones could be used to target Atlantic herring rather than a frequency range. Adapting the pods to these different sounds is merely a matter of programming of the internal signal generator, and the signal processor may have several easily selected preset frequency ranges and/or emission modes.

Targeting the emitted sound to a specific species of fish, would also potentially reduce the ratio of by-catch, as different species of fish from those targeted may not be influenced by the sound curtains and hence elude the trawl 1.

Thus, with the present invention as described above a new method of fishing has been devised, allowing a trawl to be virtually extended by barriers of sound 12 for the fish 8, as described.

Even though the above description has been given based on a pelagic trawl, the skilled person will understand that all features and the general idea behind the invention is fully applicable to other types of trawl, such as demersal or benthic trawls, including beam trawls. Evidently in those embodiments, the acoustic emitters at the bottom of the trawl 1 could be omitted.

The skilled person will also understand that the apparatus and method will be fully applicable to any species of fish 8 suitable for trawling, and with sufficient sensitivity to sound to be startled. That is to say not only those frequency ranges recited above may be used, and not only those species of fish 8 recited above may be caught.

## Claims

1. A trawl (1) adapted to be towed in a towing direction (D) along a desired towing trajectory behind a towing vessel (4), the trawl (1) comprising
a pair of trawl doors (10) where each trawl door (10) is adapted to be attached to a towing cable (11) extending from the towing vessel (4),
a bag shaped net (5) having a leading end and a trailing end (6) with respect to the towing direction (D), the bag shaped net (5) being adapted to be attached to cables (9) extending from the trawl doors (10) in a trailing direction thereof, and the bag shaped net (5) having one or more leading edges defining a mouth opening extending in a cross wise direction with respect to the towing direction (D), and the bag shaped net (5) presenting a cod end (5d) at the trailing end (7), and directional acoustic emitters (13) adapted to emit sound forwardly at an angle to the towing direction (D), said trawl (1) being
**characterized in that** the acoustic emitters (13) are provided on the trawl doors (10) and at said one or more leading edges of the bag shaped net (6).

2. A trawl (1) according to claim 1, wherein the trawl doors (10) comprise further directional acoustic emitters (13) adapted to emit sound towards at least some of said one or more leading edges of the bag shaped net (6).

3. A trawl (1) according to any one of claims 1 or 2, wherein the acoustic emitters (13) emit sound in the range of 10 Hz to 50 kHz.

4. A trawl (1) according to claim 3, wherein the acoustic emitters (13) are adapted to emit a sound spectrum.

5. A trawl (1) according to claim 3, wherein the acoustic emitters (13) are adapted to emit pure tones.

6. A trawl (1) according to any one of claims 3 to 5, wherein the acoustic emitters (13) are adapted to emit intermittently.

7. A trawl (1) according to claim 6, wherein the acoustic emitters (13) are adapted to emit with a duty cycle in the range of 5-50%, preferably 10%, and a period of less than 1 second, preferably 0.5 second.

8. A method for fishing wherein a trawl (1) comprising a bag shaped net (6) is towed in a towing direction (D) along a desired towing trajectory behind a towing vessel (4),
**characterized in that** sound adapted to startle fish (8) to be captured in the trawl (1) is emitted forwardly at an angle to the towing direction (D) from directional acoustic emitters (13) provided on trawl doors (10) of the trawl (1) and at one or more leading edges (6a, 6b) of the bag shaped net (6) of the trawl (1).

9. A method according to claim 8, wherein sound is emitted backwardly at an angle to the towing direction towards at least some of said one or more leading edges of the bag shaped net (6) from further directional acoustic emitters (13) provided on the trawl doors (10).

10. A method according to any one of claims 8 or 9, wherein the acoustic emitters (13) emit sound in the range of 10 Hz to 50 kHz.

11. A method according to claim 10, wherein the acoustic emitters (13) emit a sound spectrum.

12. A method according to claim 11, wherein the acoustic emitters (13) emit pure tones.

13. A method according to any one of claims 10 to 12, wherein the acoustic emitters (13) emit intermittently.

14. A method according to claim 13, wherein the sound is emitted with a duty cycle in the range of 5-50%, preferably 10%, and a period of less than 1 second, preferably 0.5 second.

## Patentansprüche

1. Schleppnetz (1), das ausgelegt ist, in einer Schlepprichtung (D) entlang einer gewünschten Schleppbahn hinter einem Schleppschiff (4) geschleppt zu werden, wobei das Schleppnetz (1) umfasst ein Paar von Schleppnetztüren (10), wobei jede Schleppnetztür (10) ausgelegt ist, an ein Schleppseil (11) angebracht zu sein, das sich von dem Schleppschiff (4) erstreckt,
ein sackförmiges Netz (5) mit einem vorderen Ende und einem hinteren Ende (6) in Bezug auf die Schlepprichtung (D), wobei das sackförmige Netz (5) ausgelegt ist, an Seilen (9) angebracht zu werden, die sich von den Schleppnetztüren (10) in eine Richtung nach hinten davon erstrecken, und wobei das sackförmige Netz (5) eine oder mehrere vordere Kanten aufweist, die eine Mündungsöffnung definieren, die sich in einer kreuzweisen Richtung in Bezug auf die Schlepprichtung (D) erstreckt, und wobei das sackförmige Netz (5) einen Steert (5d) an dem hinteren Ende (7) und gerichtete Schallemitter (13) aufweist, die ausgelegt sind, Schall nach vorn in einem Winkel zu der Schlepprichtung (D) zu emittieren,
wobei das Schleppnetz (1) **dadurch gekennzeichnet ist, dass** die Schallemitter (13) an den Schleppnetztüren (10) und an einer oder mehreren vorderen Kanten des sackförmigen Netzes (6) bereitgestellt sind.

2. Schleppnetz (1) nach Anspruch 1, wobei die Schleppnetztüren (10) weitere gerichtete Schallemitter (13) umfassen, die ausgelegt sind, Schall hin zu mindestens einigen der einen oder mehreren vorderen Kanten des sackförmigen Netzes (6) zu emittieren.

3. Schleppnetz (1) nach einem der Ansprüche 1 oder 2, wobei die Schallemitter (13) Schall in dem Bereich von 10 Hz bis 50 kHz emittieren.

4. Schleppnetz (1) nach Anspruch 3, wobei die Schallemitter (13) ausgelegt sind, ein Schallspektrum zu emittieren.

5. Schleppnetz (1) nach Anspruch 3, wobei die Schallemitter (13) ausgelegt sind, reine Töne zu emittieren.

6. Schleppnetz (1) nach einem der Ansprüche 3 bis 5, wobei die Schallemitter (13) ausgelegt sind, intermittierend zu emittieren.

7. Schleppnetz (1) nach Anspruch 6, wobei die Schallemitter (13) ausgelegt sind, mit einem Betriebszyklus in dem Bereich von 5-50 %, vorzugsweise 10 %, und einer Dauer von weniger als 1 Sekunde, vorzugsweise 0,5 Sekunden, zu emittieren.

8. Verfahren zum Fischen, wobei ein Schleppnetz (1), das ein sackförmiges Netz (6) umfasst, in einer Schlepprichtung (D) entlang einer gewünschten Schleppbahn hinter einem Schleppschiff (4) geschleppt wird,
**dadurch gekennzeichnet, dass** Schall, der ausgelegt ist, in dem Schleppnetz (1) zu fangende Fische (8) aufzuschrecken, nach vorn in einem Winkel zu der Schlepprichtung (D) von gerichteten Schallemittern (13) emittiert wird, die an Schleppnetztüren (10) des Schleppnetzes (1) und an einer oder mehreren vorderen Kanten (6a, 6b) des sackförmigen Netzes (6) des Schleppnetzes (1) bereitgestellt sind.

9. Verfahren nach Anspruch 8, wobei Schall rückwärts in einem Winkel zu der Schlepprichtung hin zu mindestens einigen der einen oder mehreren vorderen Kanten des sackförmigen Netzes (6) von weiteren gerichteten Schallemittern (13) emittiert wird, die an den Schleppnetztüren (10) bereitgestellt sind.

10. Verfahren nach einem der Ansprüche 8 oder 9, wobei die Schallemitter (13) Schall in dem Bereich von 10 Hz bis 50 kHz emittieren.

11. Verfahren nach Anspruch 10, wobei die Schallemitter (13) ein Schallspektrum emittieren.

12. Verfahren nach Anspruch 11, wobei die Schallemitter (13) reine Töne emittieren.

13. Verfahren nach einem der Ansprüche 10 bis 12, wobei die Schallemitter (13) intermittierend emittieren.

14. Verfahren nach Anspruch 13, wobei der Schall mit einem Betriebszyklus in dem Bereich von 5-50 %, vorzugsweise 10 %, und einer Dauer von weniger als 1 Sekunde, vorzugsweise 0,5 Sekunden, emittiert wird.

## Revendications

1. Chalut (1) conçu pour être tracté dans une direction (D) de traction le long d'une trajectoire de traction souhaitée derrière un navire tracteur (4), le chalut (1) comportant
une paire de panneaux (10) de chalut, chaque panneau (10) de chalut étant conçu pour être fixé à un câble (11) de traction s'étendant à partir du navire tracteur (4),
un filet (5) en forme de sac doté d'une extrémité antérieure et d'une extrémité postérieure (6) par rapport à la direction (D) de traction, le filet (5) en forme de sac étant conçu pour être fixé à des câbles (9) s'étendant à partir des panneaux (10) de chalut dans une direction de trait de celui-ci, et le filet (5) en forme de sac doté d'un ou de plusieurs bords antérieurs définissant une ouverture d'embouchure s'étendant dans une direction transverse par rapport à la direction (D) de traction, et le filet (5) en forme de sac présentant une poche (5d) à l'extrémité postérieure (7), et des émetteurs acoustiques directionnels (13) conçus pour émettre un son vers l'avant suivant un angle par rapport à la direction (D) de traction, ledit chalut (1) étant
**caractérisé en ce que** les émetteurs acoustiques (13) sont placés sur les panneaux (10) de chalut et au niveau dudit ou desdits bords antérieurs du filet (6) en forme de sac.

2. Chalut (1) selon la revendication 1, les panneaux (10) de chalut comportant des émetteurs acoustiques directionnels supplémentaires (13) conçus pour émettre un son vers au moins une partie dudit ou desdits bords antérieurs du filet (6) en forme de sac.

3. Chalut (1) selon l'une quelconque des revendications 1 et 2, les émetteurs acoustiques (13) émettant un son dans la plage de 10 Hz à 50 kHz.

4. Chalut (1) selon la revendication 3, les émetteurs acoustiques (13) étant conçus pour émettre un spectre sonore.

5. Chalut (1) selon la revendication 3, les émetteurs acoustiques (13) étant conçus pour émettre des tonalités pures.

6. Chalut (1) selon l'une quelconque des revendications 3 à 5, les émetteurs acoustiques (13) étant conçus pour émettre par intermittence.

7. Chalut (1) selon la revendication 6, les émetteurs acoustiques (13) étant conçus pour émettre avec un cycle de service compris dans la plage de 5 à 50%, de préférence 10%, et une période de moins de 1 seconde, de préférence 0,5 seconde.

8. Procédé de pêche, un chalut (1) comportant un filet (6) en forme de sac étant tracté dans une direction (D) de traction le long d'une trajectoire de traction souhaitée derrière un navire tracteur (4), **caractérisé en ce qu'**un son conçu pour alarmer des poissons (8) à capturer dans le chalut (1) est émis vers l'avant suivant un angle par rapport à la direction (D) de traction à partir d'émetteurs acoustiques directionnels (13) placés sur des panneaux (10) de chalut du chalut (1) et au niveau d'un ou de plusieurs bords antérieurs (6a, 6b) du filet (6) en forme de sac du chalut (1).

9. Procédé selon la revendication 8, un son étant émis vers l'arrière suivant un angle par rapport à la direction de traction vers au moins une partie dudit ou desdits bords antérieurs du filet (6) en forme de sac à partir d'émetteurs acoustiques directionnels supplémentaires (13) placés sur les panneaux (10) de chalut.

10. Procédé selon l'une quelconque des revendications 8 et 9, les émetteurs acoustiques (13) émettant un son dans la plage de 10 Hz à 50 kHz.

11. Procédé selon la revendication 10, les émetteurs acoustiques (13) émettant un spectre sonore.

12. Procédé selon la revendication 11, les émetteurs acoustiques (13) émettant des tonalités pures.

13. Procédé selon l'une quelconque des revendications 10 à 12, les émetteurs acoustiques (13) émettant par intermittence.

14. Procédé selon la revendication 13, le son étant émis avec un cycle de service compris dans la plage de 5 à 50%, de préférence 10%, et une période de moins de 1 seconde, de préférence 0,5 seconde.
